# EUROPEAN PATENT SPECIFICATION

(11) **EP 3 208 156 B1**
(45) Date of publication and mention of the grant of the patent: **29.09.2021**
(21) Application number: 15851048.7
(22) Date of filing: 13.10.2015
(51) Int. Cl.: B60R 16/02, B60K 35/00, G01D 7/00

(54) **VEHICULAR DISPLAY DEVICE**
FAHRZEUGANZEIGEVORRICHTUNG
DISPOSITIF D'AFFICHAGE DE VÉHICULE

(30) Priority: 15.10.2014 JP 2014210669
(43) Date of publication of application: 23.08.2017
(73) Proprietor: Nippon Seiki Co., Ltd., Nagaoka-shi, Niigata 940-8580 (JP)
(72) Inventor: SAITO,Ryuji, Nagaoka, Niigata (JP)
(74) Representative: Carpmaels & Ransford LLP
(86) International application number: PCT/JP2015/078933
(87) International publication number: WO 2016/060118

(56) References cited:
- JP-A- H09 134 232
- JP-A- H09 134 232
- JP-A- 2008 144 600
- JP-A- 2008 144 600
- JP-A- 2012 035 725
- JP-A- 2012 035 725

## Description

### Technical Field

The present invention relates to a vehicular display device allowing an external device to rewrite a non-volatile memory.

### Background Art

Conventionally, a vehicular display device mounted on a vehicle, in which image data for use in display can be rewritten by using a portable storage medium without removing the vehicular display device from the vehicle, is disclosed in JP2006335080A.

JP2012035725A describes an electronic control device and system for rewriting a program. JP2008144600A describes a vehicular electronic control system and an installation method of a vehicular electronic control device.

### Summary of Invention

### Technical Problem(s)

However, in order to rewrite not only image data for use in display but also a control program for controlling display in the vehicular display device disclosed in PTL 1, it is necessary to carry out further improvement in security.

The invention has been made in view of the above problem, and an object is to improve security of a vehicular display device allowing an external device to rewrite a non-volatile memory.

### Solution to Problem(s)

The invention is as defined in claim 1.

### Advantageous Effects of Invention

According to the invention, security of a vehicular display device allowing an external device to rewrite a non-volatile memory is improved.

### Brief Description of Drawings

[Fig. 1] Fig. 1 is a front view of a vehicular display device that is a first embodiment of the invention.
[Fig. 2] Fig. 2 shows an external device to be connected to the same embodiment.
[Fig. 3] Fig. 3 shows an electrical configuration of the same embodiment.
[Fig. 4] Fig. 4 shows a connection terminal arrangement of an external device to be connected to the same embodiment.
[Fig. 5] Fig. 5 shows a control procedure of the same embodiment.
[Fig. 6] Fig. 6 shows an electrical configuration of a second embodiment of the invention.
[Fig. 7] Fig. 7 shows an external device to be connected to the same embodiment.
[Fig. 8] Fig. 8 shows a control procedure of the same embodiment.

### Description of Embodiments

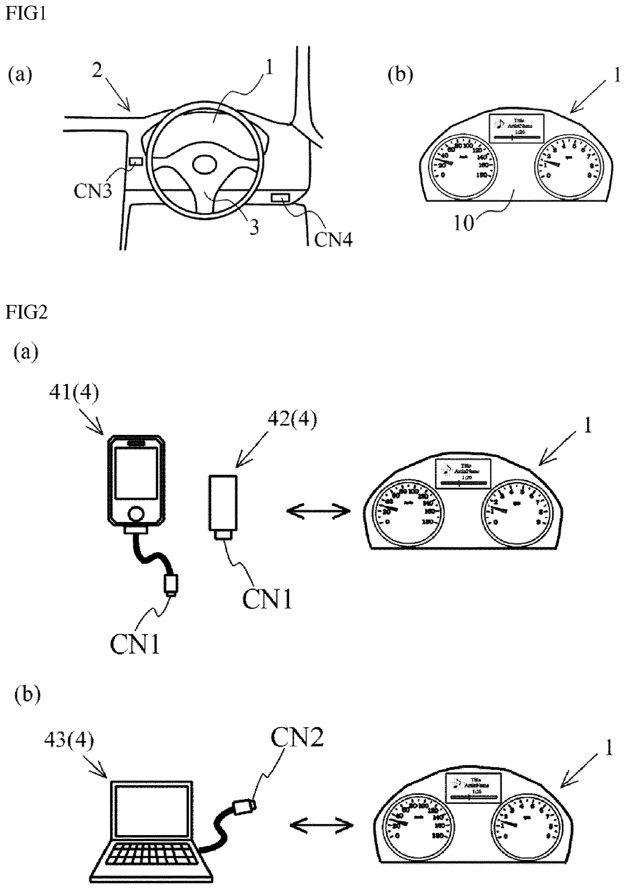

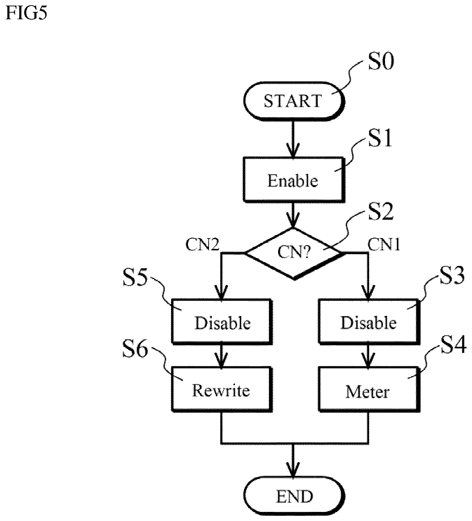

Hereinafter, embodiments in which the invention is applied to a vehicular display device mounted on a vehicle will be described with reference to Fig. 1 to Fig. 8.

### (First embodiment)

As shown in Fig. 1, a vehicular display device 1 that is a first embodiment to which the invention is applied is incorporated into an instrument panel 2 of a vehicle so as to be visually recognized while a steering 3 is being operated. A pointer instrument having an indicator including a scale and numbers for indicating measurement values such as driving speed and engine rpm of the vehicle and a pointer indicating the indicator is displayed on display means 10 of the vehicular display device 1.

The vehicular display device 1 includes the display means 10, a non-volatile memory 11, control means 12, and a connector (third connection terminal) CN3 and is electrically connected to a reset switch SW for resetting the control means 12 and vehicle information input means LAN for inputting a measurement value. The connector CN3 is exposed from the instrument panel 2 and can be connected to an external device 4.

The vehicle information input means LAN is made up of, for example, a CAN (Controller Area Network) and is a communication channel for mutually communicating with another in-vehicle device by connecting a cable to a connector (not shown) included in the vehicular display device 1.

The display means 10 is, for example, a liquid crystal display or organic EL display and displays an image in accordance with control by the control means 12.

The non-volatile memory 11 is, for example, a memory capable of holding memory even while power is not being supplied, such as a flash memory. A control program of the control means 12 and image data to be displayed on the display means 10 described below are stored in advance on the non-volatile memory 11, and data is read and written as appropriate in accordance with control by the control means 12.

The control means 12 is, for example, a microcomputer. When a reset signal is input to a terminal 121 by pushing the reset switch SW, the control means 12 reads the control program stored on the non-volatile memory 11 and starts. When the control means 12 starts, the control means 12 forms an instrument image indicating a measurement value input via the vehicle information input means LAN with the use of the image data stored on the non-volatile memory 11 and displays the instrument image on the display means 10.

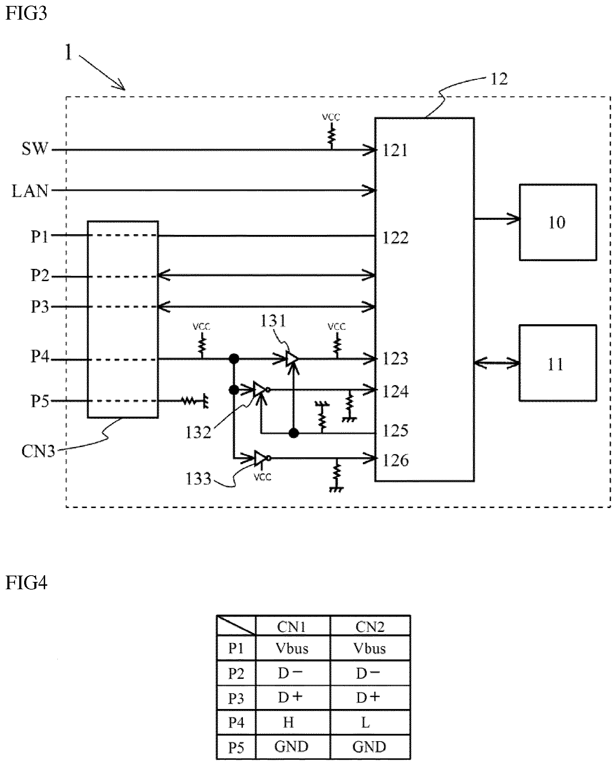

The connector CN3 includes terminals P1 to P5 and is configured to be connected to both a connector (first connection terminal) CN1 and a connector (second connection terminal) CN2 configured by terminal arrangements shown in Fig. 4.

A logic circuit 13 including a three-state inverter 131 and three-state buffers 132 and 133 is provided between the terminal P4 of the connector CN3 and the control means 12, and the control means 12 determines a type of a connector connected to the connector CN3 via the logic circuit 13.

When the external device 4 is connected to the connector CN3, the control means 12 performs mutual communication with a differential transmission method using the terminal P2 and the terminal P3 while one of the control means 12 and the external device 4 is serving as a master and the other one thereof is serving as a slave.

When the external device 4 is connected to the connector CN3 via the connector (first connection terminal) CN1 described below, the control means 12 mutually communicates with the external device 4 while the control means 12 itself is serving as a master. The external device 4 to be connected via the connector CN1 is, for example, a multifunction mobile phone 41 capable of updating various applications or a portable non-volatile memory 42. The connector CN1 may be included in the external device 4, or a cable including the connector CN1 or a conversion connector may be inserted. The control means 12 may obtain a content from the external device 4. For example, the control means 12 displays music information reproduced by the multifunction mobile phone 41 on the display means 10 or displays map information acquired by the multifunction mobile phone 41 on the display means 10, or the control means 12 reproduces music information stored on the portable non-volatile memory 42 and displays the music information on the display means 10. Alternatively, the control means 12 may provide a content to the external device 4 so that the driving speed and the engine rpm of the vehicle are input from the control means 12 to the external device 4 and are displayed on a display screen of the external device 4. Further, the control means 12 supplies power to the external device 4 connected via the connector CN1 through a terminal 122 and the terminal P1 of the connector CN3.

When the external device 4 is connected to the connector CN3 via the connector (second connection terminal) CN2 described below, the control means 12 mutually communicates with the external device 4 while the control means 12 itself is serving as a slave. The control means 12 rewrites the control program and image data stored on the non-volatile memory 11 in response to input from the external device 4. The external device 4 to be connected via the connector CN2 is, for example, a portable computer storing a program for rewriting the control program of the vehicular display device 1, and, in a case where the control program of the vehicular display device 1 is defective, the external device 4 is used to overwrite a correction program to the vehicular display device 1 by a dealer or the like. Further, the connector CN2 may be included in the external device 4, or a cable including the connector CN2 or a conversion connector may be inserted.

A control procedure of the control means 12 will be described with reference to Fig. 3 to Fig. 5.

### (Step S0)

When a reset signal is input to the terminal 121 and reset is performed, the control means 12 reads the control program stored on the non-volatile memory 11 and starts.

### (Step S1)

The control means 12 enables the three-state inverter 131 and the three-state buffer 132 via a terminal 125, and the processing proceeds to Step S2.

### (Step S2)

The control means 12 determines whether or not an external device including the connector CN2 is connected to the connector CN3 on the basis of a state of signals input to a terminal 123 and a terminal 124. When the connector CN1 is connected, a positive logic (voltage close to power supply voltage) H is input to the terminal P4 of the connector CN3, and, when the connector CN2 is connected, a negative logic (voltage close to zero voltage) L is input thereto, and, as shown in Fig. 3, the state of signals input to the terminal 123 and the terminal 124 is such that the positive logic H is input to a terminal 116 and the negative logic L is input to a terminal 117 while the three-state inverter 131 and the three-state buffer 132 are in a disabled state. In a case where the external device including the connector CN2 is not connected to the connector CN3 (the external device 4 including the connector CN1 is connected to the connector CN3 or nothing is connected to the connector CN3) while the three-state inverter 131 and the three-state buffer 132 are in an enabled state, the positive logic H is input to the terminal 123 and the negative logic L is input to the terminal 124, which is similar to the period in which the three-state inverter 131 and the three-state buffer 132 are in the disabled state. Meanwhile, when the external device including the connector CN2 is connected to the connector CN3 while the three-state inverter 131 and the three-state buffer 132 are in the enabled state, the negative logic L is input to the terminal 123 and the positive logic H is input to the terminal 124. With this, the control means 12 determines whether or not the external device including the connector CN2 is connected to the connector CN3, and, in a case where the external device including the connector CN2 is connected to the connector CN3 (Step S2: CN2), the processing proceeds to Step S5, and, if not (Step S2: CN1), the processing proceeds to Step S3.

### (Step S3)

The control means 12 disables the three-state inverter 131 and the three-state buffer 132 via the terminal 125, and the processing proceeds to Step S4.

### (Step S4)

The control means 12 displays, on the display means 10, a measurement value input via the vehicle information input means LAN as an instrument image. Further, when external devices 41 and 42 are connected, the control means 12 starts communication and displays, on the display means 10, contents input from the external devices 41 and 42 together with the instrument image.

### (Step S5)

The control means 12 disables the three-state inverter 131 and the three-state buffer 132 via the terminal 125, and the processing proceeds to Step S6.

### (Step S6)

When an external device 43 is connected, the control means 12 rewrites content of the non-volatile memory 11 on the basis of data input from the external device 43 while the control means 12 itself is serving as a slave. Further, while the content of the non-volatile memory 11 is being rewritten, the control means 12 displays a message that rewriting to the non-volatile memory 11 is currently performed and a state of progress thereof on the display means 10, and, when the rewriting of the content of the non-volatile memory 11 is completed, the control means 12 displays, on the display means 10, a message to urge that the rewriting be completed, the control means 12 be reset, and re-start thereof be performed.

Hereinabove, a configuration of the first embodiment has been described. With this configuration, rewriting of the control program and image data stored on the non-volatile memory 11 can be switched in accordance with types of the connectors CN1 and CN2 connected to the connector CN3. Therefore, it is possible to use a common connector at normal use (at the time of instrument display) and at the time of rewriting the control program and image data stored on the non-volatile memory 11, and it is also possible to determine the time of rewriting the control program and image data stored on the non-volatile memory 11 and switch permission/non-permission of access to the non-volatile memory 11. Thus, security is improved.

### (Second embodiment)

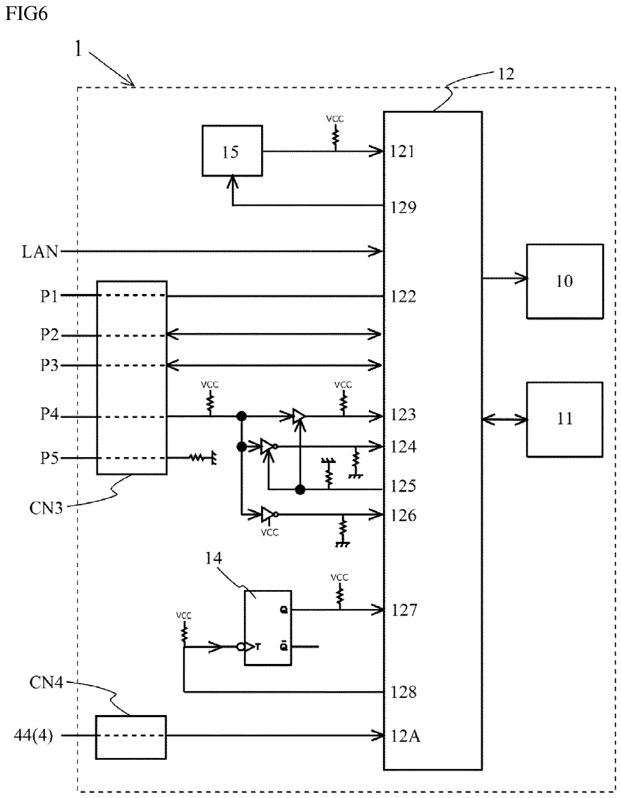

Further, as shown in Fig. 6, the vehicular display device 1 that is a second embodiment to which the invention is applied includes a connector (fourth connection terminal) CN4, a latch 14, and a reset IC 15 in addition to the configuration of the first embodiment.

The latch 14 is a latch circuit capable of holding information of one bit and holds a state in which writing to the non-volatile memory 11 is permitted/not permitted. The latch 14 may be a flip-flop circuit or the like as long as the latch can hold the state in which writing to the non-volatile memory 11 is permitted/not permitted.

The reset IC 15 is made up of, for example, a voltage detector including a voltage detecting device and outputs a reset signal to the terminal 121 in accordance with an output voltage of a terminal 129 of the control means 12. The reset IC 15 preferably includes a delay circuit.

The connector CN4 positions on, for example, a lower right or left side under the steering 3 on a back surface of the instrument panel 2 and is connected to an external device 44 for acquiring various kinds of diagnosis information from a diagnosis information function (OBD: On-Board Diagnostics) of the vehicle. The external device 44 is, for example, a portable computer and includes a connector (fifth connection terminal) CN5 connectable to the connector CN4 and is connected to the connector CN4 or is connected to the connector CN4 via a cable including the connector CN2 or a conversion connector.

The control means 12 has the diagnosis information function of the vehicle, and, when the external device 44 is connected, outputs various kinds of diagnosis information to the external device 44. The control means 12 can rewrite information of the latch 14 to information indicating that writing to the non-volatile memory 11 is permitted in accordance with control by the external device 44. Further, the control means 12 controls output of the terminal 129 to cause the reset IC 15 to output a reset signal in accordance with a request from the external device 44, thereby resetting the control means itself.

In a control procedure of the control means 12 in the second embodiment, Step S7 and Step S8 are performed, instead of Step S6 in the control procedure of the first embodiment.

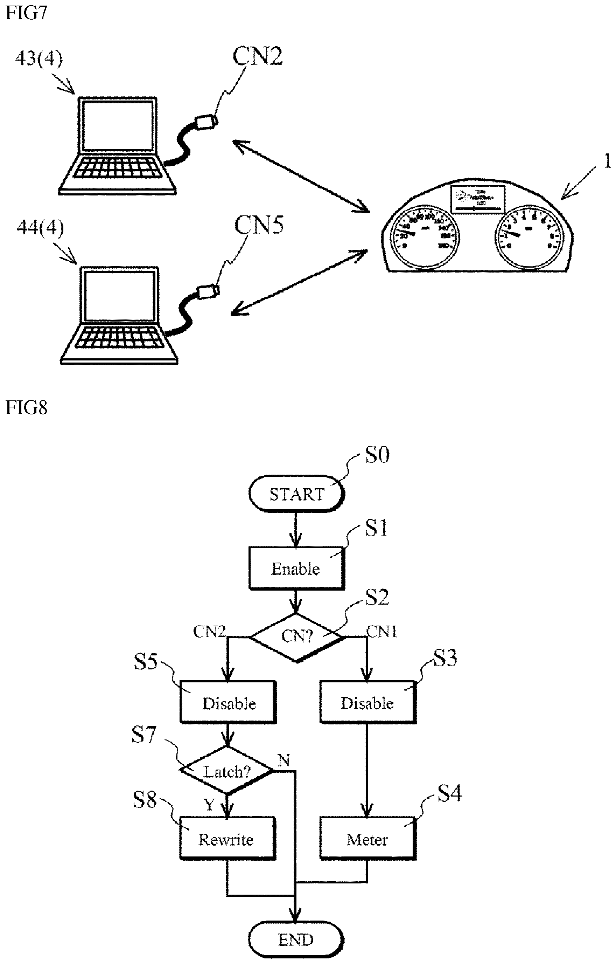

The control procedure of the control means 12 will be described with reference to Fig. 8 in order from Step S7.

### (Step S7)

After Step S5 is completed, in a case where a state stored on the latch 14 is permission of writing to the non-volatile memory 11 (Step S7: Y), the processing proceeds to Step S8, and, if not (Step S7N), the control means 12 displays, on the display means 10, a message indicating that writing to the non-volatile memory 11 is not permitted and completes the procedure.

### (Step S8)

The control means 12 rewrites content of the non-volatile memory 11 on the basis of data input from the external device 43 while the control means 12 itself is serving as a slave. Further, while the content of the non-volatile memory 11 is being rewritten, the control means 12 displays a message that rewriting to the non-volatile memory 11 is currently performed and a state of progress thereof on the display means 10, and, when the rewriting of the content of the non-volatile memory 11 is completed, the control means 12 displays, on the display means 10, a message to urge that the rewriting be completed, the control means 12 be reset, and re-start thereof be performed and stores, on the latch 14, a state in which writing to the non-volatile memory 11 is not permitted.

Hereinabove, a configuration of the second embodiment has been described. With this configuration, even in a case where the external device 4 including the connector CN1 is connected to the connector CN3, the content of the non-volatile memory 11 cannot be rewritten unless a state stored on the latch 14 is rewritten to permission of writing to the non-volatile memory 11 via the connector CN4 that is different from the connector CN3. Thus, security is improved. Further, by using the connector CN4 also as a connector for transmitting diagnosis information of the vehicle, the connector being a connector that the vehicular display device should include, it is possible to improve security without increasing the number of connectors.

Hereinabove, the first embodiment and the second embodiment to which the invention is applied have been described.

For example, in the second embodiment, content of the latch 14 can be rewritten by the external device 44 for acquiring various diagnosis information from the diagnosis information function (OBD: On-Board Diagnostics) of the vehicle. However, the invention is not limited thereto, and the content may be configured to be rewritten via the vehicle information input means LAN.

Further, the vehicular display device 1 is connected to a battery of the vehicle and therefore power is stably supplied, and thus it is preferable that the control means 12 supply power to the external device 43 for performing writing to the non-volatile memory 11 so as to reduce a possibility that the external device 43 is short of power while performing rewriting processing on the non-volatile memory 11 and the rewriting processing is interrupted.

### Industrial Applicability

The invention is suitable for a vehicular display device to be mounted on a vehicle.

### Reference Signs List

- 1:: vehicular display device
- 10:: display means
- 11:: non-volatile memory
- 12:: control means
- 13:: logic circuit
- 14:: latch
- 15:: reset IC
- 2:: instrument panel
- 3:: steering
- 4:: external device
- CN1:: connector (first connection terminal)
- CN2:: connector (second connection terminal)
- CN3:: connector (third connection terminal)
- CN4:: connector (fourth connection terminal)
- LAN:: vehicle information acquiring means
- SW:: reset switch

## Claims

1. A vehicular display device (1) including display means (10),
control means (12) for performing display control of the display means (10),
a non-volatile memory (11) storing at least an operation program of the control means (12) and image data to be displayed on the display means (10), and
a third connection terminal (C3) connectable to both a first connection terminal (CN1) and a second connection terminal (CN2) having different terminal arrangements,
the vehicular display device (1) being housed in an instrument panel (2) of a vehicle, comprising:
an external device (4) configured to connect the first connection terminal (CN1) or the second connection terminal (CN2) to the third connection terminal (CN3) to communicate with the control means (12),
a fourth connection terminal (CN4) different from the third connection terminal (CN3); and
a latch (14) configured to rewrite a permission state of rewriting to the non-volatile memory (11) via the fourth connection terminal (CN4) and hold the permission state, wherein
the control means (12) switches permission/non-permission of rewriting to the non-volatile memory (11) in accordance with the state held by the latch (14) and a type of the connection terminal connected to the third connection terminal (CN3), wherein
the control means (12) communicates diagnosis information to the external device (4) via the fourth connection terminal (CN4); and
the latch (14) allows the external device (4) to rewrite the permission state of rewriting to the non-volatile memory (11) via the control means (12).

2. The vehicular display device (1) according to claim 1, wherein:
when the control means (12) performs communication with a communication method in which, when the control means (12) communicates with the external device (4), one of the control means (12) and the external device (4) serves as a master and performs control and the other one of the control means (12) and the external device (4) performs operation in accordance with control by the one of the control means (12) and the external device (4); and
the control means (12) communicates with the external device (4) while switching master/slave of the control means (12) in accordance with the type of the connection terminal connected to the third connection terminal (CN3).

3. The vehicular display device (1) according to claim 2, wherein
the control means (12) supplies power to the external device (4) via the third connection terminal (CN3).

4. The vehicular display device (1) according to any one of claims 1 to 3, wherein
the control means (12) switches permission/non-permission of rewriting to the non-volatile memory (11) in accordance with the type of the connection terminal connected to the third connection terminal (CN3) when the control means (12) returns from reset.

## Patentansprüche

1. Fahrzeuganzeigevorrichtung (1), die Folgendes aufweist:
eine Anzeigeeinrichtung (10),
eine Steuereinrichtung (12) zum Durchführen der Anzeigensteuerung der Anzeigeeinrichtung (10),
einen nichtflüchtigen Speicher (11), der mindestens ein Betriebsprogramm der Steuereinrichtung (12) und auf der Anzeigeeinrichtung (10) anzuzeigende Bilddaten speichert, und
eine dritte Anschlussklemme (C3), die sowohl mit einer ersten Anschlussklemme (CN1) als auch mit einer zweiten Anschlussklemme (CN2) verbunden werden kann, die unterschiedliche Klemmenanordnungen aufweisen,
wobei die Fahrzeuganzeigevorrichtung (1), die in einem Armaturenbrett (2) eines Fahrzeugs untergebracht ist, Folgendes aufweist:
eine externe Vorrichtung (4), die ausgebildet ist, die erste Anschlussklemme (CN1) oder die zweite Anschlussklemme (CN2) mit der dritten Anschlussklemme (CN3) zu verbinden, um mit der Steuereinrichtung (12) zu kommunizieren,
eine vierte Anschlussklemme (CN4), die von der dritten Anschlussklemme (CN3) verschieden ist; und
einen Signalspeicher (14), der dazu ausgebildet ist, einen Erlaubniszustand des Umschreibens in den nichtflüchtigen Speicher (11) über die vierte Anschlussklemme (CN4) umzuschreiben und den Erlaubniszustand zu halten, wobei
die Steuereinrichtung (12) die Erlaubnis/Nicht-Erlaubnis zum Umschreiben in den nichtflüchtigen Speicher (11) im Einklang mit dem von dem Signalspeicher (14) gehaltenen Zustand und einem Typ der Anschlussklemme, die mit der dritten Anschlussklemme (CN3) verbunden ist, umschaltet, wobei die Steuereinrichtung (12) Diagnoseinformationen über die vierte Anschlussklemme (CN4) an die externe Vorrichtung (4) übermittelt; und
der Signalspeicher (14) es der externen Vorrichtung (4) ermöglicht, den Erlaubniszustand des Umschreibens in den nichtflüchtigen Speicher (11) über die Steuereinrichtung (12) umzuschreiben.

2. Fahrzeuganzeigevorrichtung (1) gemäß Anspruch 1, wobei:
wenn die Steuereinrichtung (12) eine Kommunikation mit einem Kommunikationsverfahren durchführt, bei dem, wenn die Steuereinrichtung (12) mit der externen Vorrichtung (4) kommuniziert, eine der Steuereinrichtungen (12) und der externen Vorrichtung (4) als Master dient und die Steuerung durchführt und die andere der Steuereinrichtungen (12) und der externen Vorrichtung (4) den Betrieb im Einklang mit der Steuerung durch die eine der Steuereinrichtungen (12) und der externen Vorrichtung (4) durchführt; und
die Steuereinrichtung (12) mit der externen Vorrichtung (4) kommuniziert, während sie Master/Slave der Steuereinrichtung (12) im Einklang mit dem Typ der mit der dritten Anschlussklemme (CN3) verbundenen Anschlussklemme umschaltet.

3. Fahrzeuganzeigevorrichtung (1) gemäß Anspruch 2, wobei die Steuereinrichtung (12) die externe Vorrichtung (4) über die dritte Anschlussklemme (CN3) mit Strom versorgt.

4. Fahrzeuganzeigevorrichtung (1) gemäß einem der Ansprüche 1 bis 3, wobei
die Steuereinrichtung (12) die Erlaubnis/Nicht-Erlaubnis zum Umschreiben in den nichtflüchtigen Speicher (11) im Einklang mit dem Typ der mit der dritten Anschlussklemme (CN3) verbundenen Anschlussklemme umschaltet, wenn die Steuereinrichtung (12) aus dem Reset zurückkehrt.

## Revendications

1. Dispositif d'affichage de véhicule (1), incluant :
un moyen d'affichage (10),
un moyen de commande (12) pour réaliser une commande d'affichage du moyen d'affichage (10),
une mémoire non volatile (11) qui stocke au moins un programme d'opérations du moyen de commande (12) et des données d'image à afficher sur le moyen d'affichage (10), et
une troisième borne de connexion (C3) pouvant être connectée à une première borne de connexion (CN1) et à une deuxième borne de connexion (CN2) ayant différents agencements de bornes,
le dispositif d'affichage de véhicule (1) étant logé dans un panneau d'instruments (2) d'un véhicule, comprenant :
un dispositif externe (4) configuré pour connecter la première borne de connexion (CN1) ou la deuxième borne de connexion (CN2) à la troisième borne de connexion (CN3) pour communiquer avec le moyen de commande (12),
une quatrième borne de connexion (CN4) différente de la troisième borne de connexion (CN3) ; et
un verrou (14) configuré pour réécrire un état de permission de réécriture dans la mémoire non volatile (11) par l'intermédiaire de la quatrième borne de connexion (CN4) et pour maintenir l'état de permission,
le moyen de commande (12) permutant une permission/non-permission de réécriture dans la mémoire non volatile (11) selon l'état maintenu par le verrou (14) et un type de la borne de connexion connectée à la troisième borne de connexion (CN3),
le moyen de commande (12) communiquant des informations de diagnostic au dispositif externe (4) par l'intermédiaire de la quatrième borne de connexion (CN4) ; et
le verrou (14) permettant au dispositif externe (4) de réécrire l'état de permission de réécriture dans la mémoire non volatile (11) par l'intermédiaire du moyen de commande (12).

2. Dispositif d'affichage de véhicule (1) selon la revendication 1, dans lequel :
quand le moyen de commande (12) réalise une communication avec un procédé de communication dans lequel le moyen de commande (12) communique avec le dispositif externe (4), l'un parmi le moyen de commande (12) et le dispositif externe (4) sert de maître et réalise une commande et l'autre parmi le moyen de commande (12) et le dispositif externe (4) réalise une opération selon une commande par l'un parmi le moyen de commande (12) et le dispositif externe (4) ; et
le moyen de commande (12) communique avec le dispositif externe (4) pendant une permutation maître/esclave du moyen de commande (12) selon le type de la borne de connexion connectée à la troisième borne de connexion (CN3).

3. Dispositif d'affichage de véhicule (1) selon la revendication 2, dans lequel :
le moyen de commande (12) alimente le dispositif externe (4) par l'intermédiaire de la troisième borne de connexion (CN3).

4. Dispositif d'affichage de véhicule (1) selon l'une quelconque des revendications 1 à 3, dans lequel :
le moyen de commande (12) permute une permission/non-permission de réécriture dans la mémoire non volatile (11) selon le type de la borne de connexion connectée à la troisième borne de connexion (CN3) quand le moyen de commande (12) revient d'une réinitialisation.
